# EUROPEAN PATENT APPLICATION

(11) **EP 2 860 794 A1**
(43) Date of publication of application: **15.04.2015**
(21) Application number: 13820543.0
(22) Date of filing: 12.07.2013
(51) Int. Cl.: H01M 2/20, H01M 2/10

(54) **BATTERY WIRING MODULE**

(30) Priority: 18.07.2012 JP 2012159419
(71) Applicant: AutoNetworks Technologies, Ltd., Yokkaichi-shi, Mie 510-8503 (JP); Sumitomo Wiring Systems, Ltd., Yokkaichi-shi, Mie-ken 510-8503 (JP); Sumitomo Electric Industries, Ltd., Chuo-ku Osaka-shi Osaka 541-0041 (JP)
(72) Inventor: NAKAYAMA, Osamu, Yokkaichi-shi Mie 510-8503 (JP); OKAMOTO, Ryoya, Yokkaichi-shi Mie 510-8503 (JP); MORITA, Mitsutoshi, Yokkaichi-shi Mie 510-8503 (JP); MIYAZAKI, Katsushi, Yokkaichi-shi Mie 510-8503 (JP)
(74) Representative: Horn Kleimann Waitzhofer
(86) International application number: PCT/JP2013/069122
(87) International publication number: WO 2014/013946

(57) **Abstract**

Provided is a battery wiring module 20 configured to be attached to a single cell group 10 obtained by lining up a plurality of single cells having positive and negative electrode terminals. The battery wiring module 20 includes a connector 30 having a terminal 37 for detecting a state of a single cell, and a resin protector 23 having a holding section 26 for holding the connector 30. An electrical wire 41 is connected to one end of the terminal 37, and a connecting section 40 that is connectable to the single cell is formed at the other end of the terminal 37. The connector 30 is held in the holding section 26 so as to be movable from an unconnected position at which the connector 30 is not connected to the single cell to a connected position at which the connector 30 electrically connects the connecting section 40 of the terminal 37 to the single cell and is engaged with the single cell.

## Description

### Technical Field

The present invention relates to a battery wiring module.

### Background Art

Battery modules that are mounted in, for example, electric cars or hybrid vehicles are ordinarily configured by connecting a large number of single cells in series to each other via busbars.

Such a battery module includes, for example, terminals for detecting the states (such as a voltage, a temperature, or the like) of the group of single cells, and electrical wires that connect the terminals to a controller such as an ECU (see, for example, Patent Document 1).

### Citation List

### Patent Document

Patent Document 1: JP 2011-91003A

### Summary of Invention

### Technical Problem

In the above-described Patent Document 1, voltage detection terminals (terminals) to which voltage detection wires (electrical wires) are crimped are fastened by bolts to electrodes together with the busbars that connect the single cells, and thus the voltage detection terminals are electrically connectable to a controller such as an ECU that controls the group of single cells and the battery.

Meanwhile, as a method for connecting the terminals to a device such as a controller that controls the battery, there is a method using connectors, in addition to the fastening using bolts. However, when connectors are used in a battery module including a large number of single cells, it is necessary to attach the same or similar multiple connectors while specifying positions for the connectors based on lengths of electrical wires connected to the connectors, possibly causing a faulty attachment operation. Furthermore, since an operation for fixing the electrical wires is needed after the attachment of the connectors, there is a problem in the large number of operation processes.

The present invention has been accomplished in view of the above-described circumferences, and it is an object of the present invention to simplify an operation for connecting a terminal for detecting the state of a single cell.

### Solution to Problem

In order to solve the above-described problem, the present invention is a battery wiring module configured to be attached to a single cell group obtained by lining up a plurality of single cells having positive and negative electrode terminals, the battery wiring module including: a connector including a terminal for detecting a state of a single cell; and a resin protector including a holding section for holding the connector, wherein an electrical wire is connected to one end of the terminal, and a connecting section that is connectable to the single cell is formed at the other end of the terminal, and the connector is held in the holding section so as to be movable from an unconnected position at which the connector is not connected to the single cell to a connected position at which the connector electrically connects the connecting section of the terminal to the single cell and is engaged with the single cell.

In the present invention, the resin protector includes the holding section that holds the connector so that it is movable from an unconnected position at which the connector is not connected to a single cell to a connected position at which the connector electrically connects the connecting section of the terminal to the single cell and is engaged with the single cell. Therefore, by letting the holding section of the resin protector hold the connector including the terminals for detecting the states of single cells, attaching the connector on the single cell group, and then moving the connector to the connected position, it is possible to electrically connects the terminals and the single cells, and the connector is engaged with the single cell. Furthermore, the electrical wire is connected in advance to one end of the terminal and integrated with the connector.

As a result, according to the present invention, it is possible to simplify an operation for connecting the terminal for detecting the state of a single cell.

The present invention preferably has the following configurations.

It is preferable if the resin protector includes a retaining section for holding the connector in a retained state. This is because it is possible to hold the connector in a retained state even at an unconnected position.

It is preferable if the resin protector has an electrical wire fixing section for preventing the electrical wire from projecting, since no separate member (for example, a bundling member or the like) for fixing the electrical wire is necessary.

### Advantageous Effects of Invention

According to the present invention, it is possible to simplify an operation for connecting a terminal for detecting the state of a single cell.

### Brief Description of Drawings

FIG. 1 is a plan view showing a part of a battery module to which a battery wiring module according to Embodiment 1 is attached.
FIG. 2 is a cross-sectional view showing a part of the battery module.
FIG. 3 is a side view showing a part of a battery.
FIG. 4 is a plan view showing a part of the battery wiring module.
FIG. 5 is a plan view showing a part of a resin protector.
FIG. 6 is a cross-sectional view showing a part of the battery module in an unconnected state.

### Description of Embodiments

### Embodiment 1

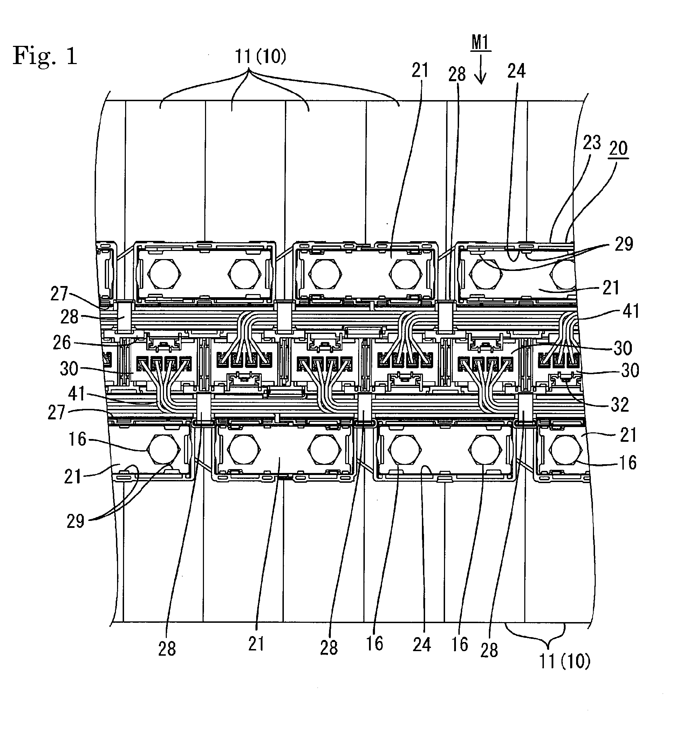

Embodiment 1 of the present invention will be described with reference to FIGS. 1 to 6. A battery module M1 according to the present embodiment is mounted in a vehicle (not shown) such as an electric car or hybrid car, and is used as a power supply for driving the vehicle.

The battery module M1 includes a single cell group 10 that is obtained by lining up a plurality of single cells (not shown) and to which a battery wiring module 20 is attached. In the following description, there is sometimes the case where a reference numeral is given to one of the same multiple members, and no reference numeral is given to the remaining members.

### Single cell group 10

As shown in FIG. 1, the battery module M1 of the present embodiment includes the single cell group 10 obtained by lining up a plurality of cell packs 11 in which four single cells are connected to each other in series. In the present embodiment, the single cells are laminate-shaped thin single cells, and a power generation element is accommodated in each single cell.

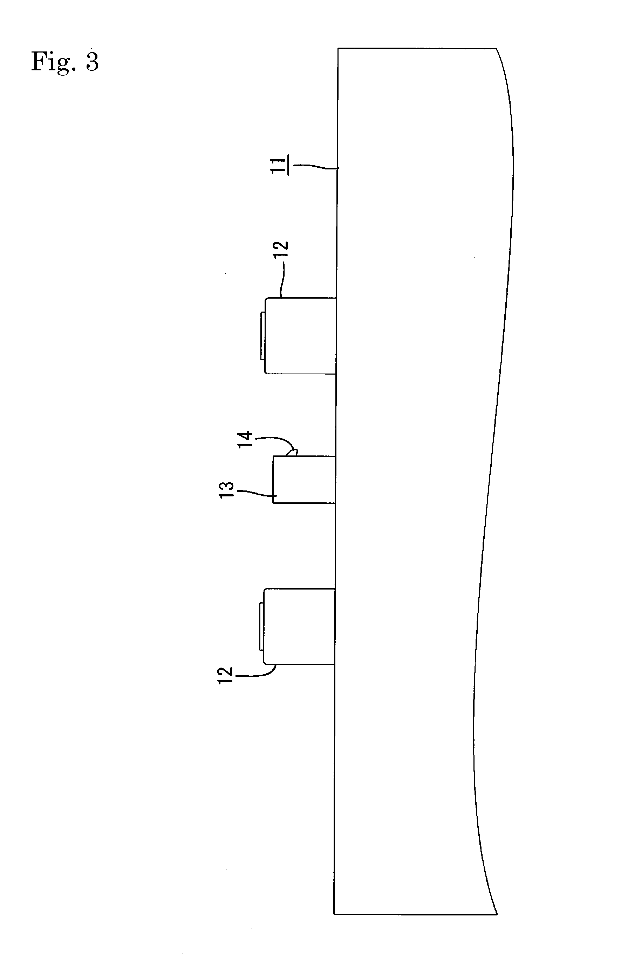

Each cell pack 11 has the shape of a flat and substantially rectangular parallelepiped and, as shown in FIG. 3, positive and negative electrode terminal sections 12 are formed protruding from the upper surface of the cell pack 11. The two terminal sections 12 have the same shape and size. Each terminal section 12 has the shape of a hole, and includes a threaded section (not shown) into which a thread of a bolt 16 for connecting to a busbar 21 can be screwed, which will be described later. The plurality of cell packs 11 are arranged so that adjacent terminal sections 12 have different polarities.

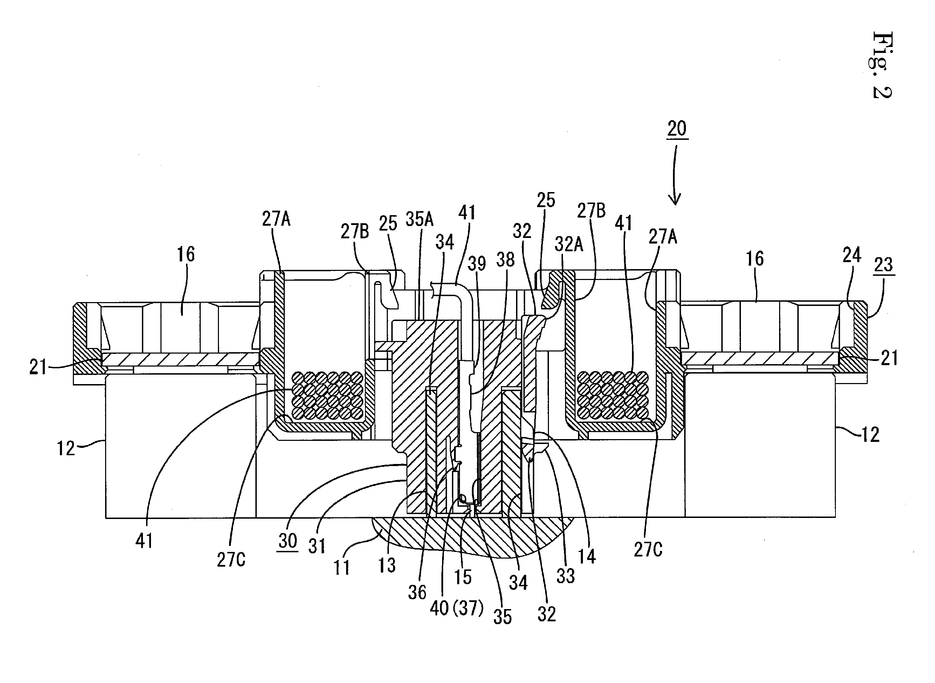

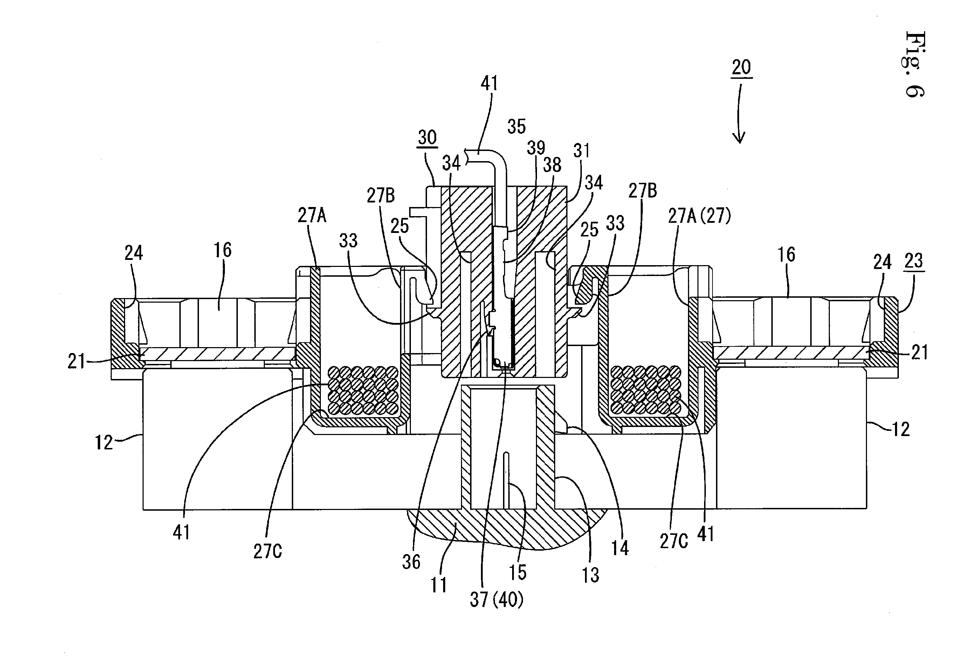

As shown in FIG. 2, a connector section 13 in the shape of a tube with its upper end opened is provided between the positive and negative terminal sections 12. As shown in FIGS. 3 and 6, a latching protrusion 14 for latching a connector 30 (counterpart with which it is to be engaged) (which will be described later) is provided on the outer wall of the connector section 13.

In each connector section 13, male terminals 15 that are connected to the corresponding single cells are arranged protruding. That is, in one connector section 13, four terminals 15 are arranged protruding. The four terminals 15 arranged in the connector section 13 are configured to be electrically connected to terminals 37 of the counterpart connector 30.

### Battery wiring module 20

The battery wiring module 20 includes a plurality of metal busbars 21 that are connected to the positive electrode terminal section 12 and the negative electrode terminal section 12 of adjacent cell packs 11, and a resin protector 23 that is made of a synthetic resin and includes busbar holding sections 24 that hold the busbars 21 and connector holding sections 26 that hold the connectors 30.

### Busbar 21

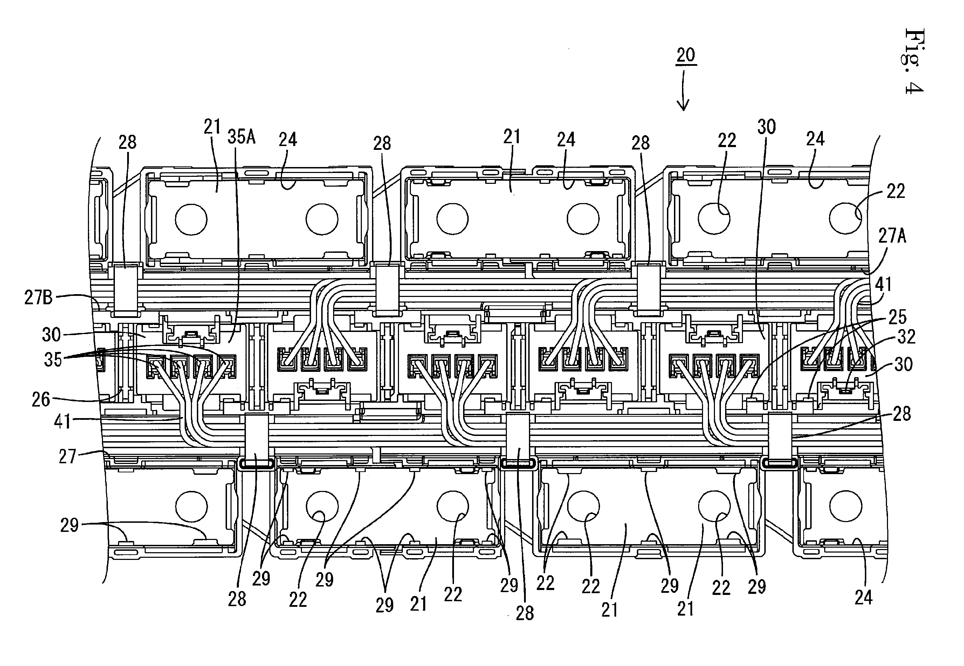

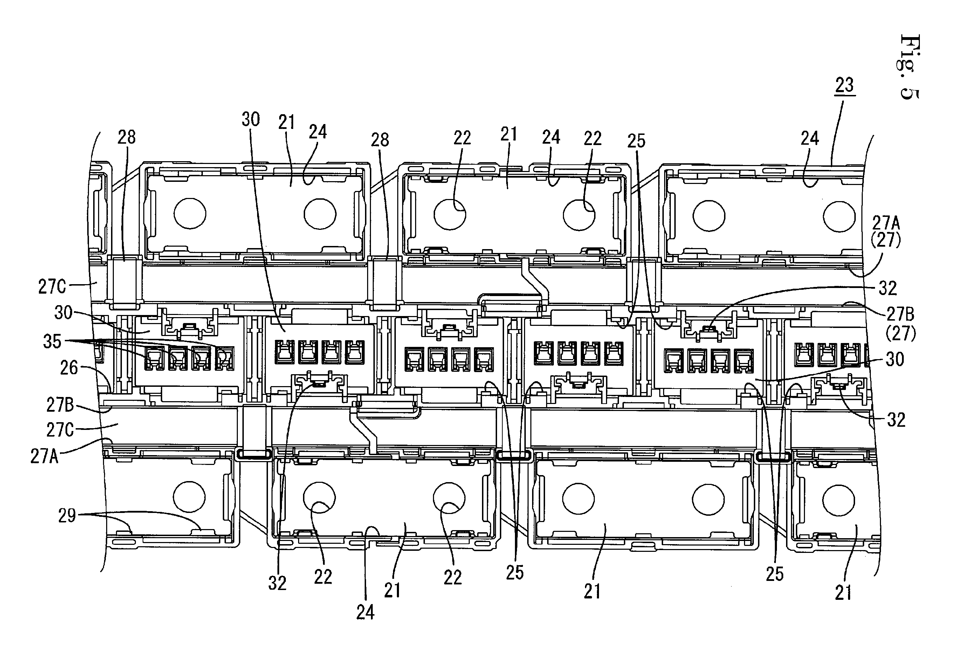

Each busbar 21 is formed by pressing a plate material made of metal such as copper, copper alloy, stainless steel (SUS), or aluminum into a predetermined shape and has a substantially rectangular shape as a whole, as shown in FIGS. 4 and 5. The surface of the busbar 21 may be plated with metal such as tin or nickel. The busbar 21 has a pair of terminal through-holes 22 that are substantially circular and through which the bolts 16 for connecting to the terminal sections 12 are inserted, the terminal through-holes 22 being formed penetrating through the busbar 21.

The terminal through-holes 22 are each set to be slightly larger than the hole diameter of the terminal section 12. By the bolts 16 being inserted into the terminal through-holes 22 and the threads of the bolts 16 being screwed into the holes of the terminal sections 12 with the busbar 21 being sandwiched between the head of the bolts 16 and the terminal blocks, the terminal sections 12 and the busbar 21 are electrically connected to each other.

### Resin protector 23

The resin protector 23 is obtained by coupling a plurality of coupling units and has an elongated shape, as shown in FIG. 1, extending in the direction (horizontal direction in FIG. 1) in which the cell packs 11 are lined up. The resin protector 23 includes a plurality of busbar holding sections 24 that open upward, and respectively have partition walls that separate from the outside and can hold the busbars 21, the plurality of busbar holding sections 24 being lined up in the longitudinal direction thereof at both sides of the resin protector 23. Each busbar holding section 24 includes a plurality of stopper pieces 29 for preventing the busbar 21 from disengaging upward.

The connector holding sections 26 are provided between the two lines of busbar holding sections 24 lined up at both sides, and electrical wire accommodating grooves 27 are respectively provided between the connector holding sections 26 and the busbar holding sections 24.

The electrical wire accommodating grooves 27 accommodate electrical wires 41 that are connected to one ends of the terminals 37 that are accommodated in terminal accommodating sections 35 of the connectors 30 held by the connector holding sections 26.

As shown in FIG. 4, each of the two electrical wire accommodating grooves 27 has a pair of groove wall sections 27A and 27B, and a bottom section 27C that connects the pair of groove wall sections, and can accommodate therein a plurality of electrical wires 41.

Furthermore, on the top end edges of the electrical wire accommodating grooves 27, electrical wire fixing sections 28 that prevent the electrical wires 41 from projecting from the electrical wire accommodating grooves 27 are provided extending from one groove wall section 27A to the other groove wall section 27B. Each electrical wire fixing section 28 is provided at a position between adjacent busbar holding sections 24.

Furthermore, as shown in FIGS. 2 and 6, on the groove wall sections 27B of the two electrical wire accommodating grooves 27 on the connector holding section 26 sides, retaining pieces 25 (example of retaining sections) are provided for each connector 30, the retaining pieces 25 holding the connectors 30 in a retained state. The retaining pieces 25 are located such that each connector 30 is retained at two positions in the diagonal direction.

In the present embodiment, the connector holding sections 26 (example of a holding section) are provided between the two electrical wire accommodating grooves 27. The connector holding section 26 is formed along the outer periphery of the connectors 30.

### Connector 30

As shown in FIG. 1, the connector 30 held by the connector holding section 26 is configured to accommodate four terminals 37. The connector 30 includes a housing 31 in the shape of a substantially rectangular parallelepiped, and the four terminals 37 that are housed in the housing 31.

The housing 31 is provided with a latch piece 32 that receives the latching protrusion 14 of the connector section 13 and is latched to the single cells. The latch piece 32 has a latch hole 32A into which the latching protrusion 14 is fitted. Furthermore, the housing 31 includes a retaining protrusion 33 that prevents, with the retaining piece 25 provided on the resin protector 23, the housing 31 from disengaging upward.

The housing 31 is provided with a groove section 34 in which the connector section 13 is accommodated. The housing 31 includes four terminal accommodating sections 35 arranged in parallel to each other. Each terminal accommodating section 35 has, on its inner peripheral surface, a lance 36 that flexibly protrudes into the terminal accommodating section 35 and thereby engages with a terminal 37 that is accommodated in the terminal accommodating section 35.

The terminals 37 housed in the housing 31 are so-called female terminals 37, which each have, on one end (upper end in FIG. 2) thereof, barrel sections 38 and 39 that are to be connected to the electrical wires 41 and, on the other end (the lower end in FIG. 2) thereof, a connecting section 40 that is box-shaped and connectable to a single cell.

The barrel sections 38 and 39, although not shown in detail in the drawings, encompass a wire barrel section 38 that is crimped to an exposed core wire (not shown) at a terminal of the electrical wire 41, and an insulation barrel section 39 that is crimped to the section coated with an insulation coating of the electrical wire 41.

The connecting section 40 includes an elastic contact piece (not shown), and by the elastic contact piece being in contact with a terminal 15 of the connector section 13, a single cell and the terminal 37 of the connector 30 are electrically connected to each other. Furthermore, an engagement section (not shown) that engages with the lance 36 is provided between the connecting section 40 of the terminal 37 and the barrel sections 38 and 39.

The terminals 37 housed in the connector 30 are terminals 37 for detecting the states of single cells, and are specifically voltage detection terminals 37 for detecting the voltages of single cells. The electrical wires 41 that are connected to the terminals 37 are guided from a back wall 35A (wall section arranged on the upper side of FIGS. 2 and 6) of the terminal accommodating sections 35 to the outside of the housing 31, and are connected to a control unit (not shown) such as an ECU. The electrical wires 41 are arranged in the electrical wire accommodating groove 27 on the side opposite to the latch piece 32 of the housing 31.

Meanwhile, the connector 30 is held in the connector holding section 26 so as to be movable in the vertical direction in FIG. 6. Specifically, the connector 30 is held in the connector holding section 26 so as to be movable from an unconnected position (position shown in FIG. 6, for example) at which the connector 30 is not connected to the single cells to a connected position (position shown in FIG. 2) at which the connector 30 electrically connects the connecting sections 40 of the terminals 37 to the single cells and is engaged with the single cells. At the unconnected position, the terminals 37 of the connector 30 and the terminals 15 of the connector section 13 are not in contact with each other, and at the connected position, the connecting sections 40 of the terminals 37 and the terminals 15 of the connector section 13 are in contact with each other and the connector 30 is engaged by the connector section 13.

### Method for assembling the battery wiring module 20

When the battery wiring module 20 according to the present embodiment is assembled, the busbars 21 are first accommodated in the busbar holding sections 24 of the resin protector 23.

Then, the terminals 37 to one end of which the electrical wires 41 are connected are accommodated in the terminal accommodating sections 35 of the connectors 30, and the connectors 30 are fitted into and attached to the connector holding sections 26. When a connector 30 is fitted into the corresponding connector holding section 26, the retaining protrusion 33 formed on the housing 31 of the connector 30 abuts against the retaining piece 25, and the retaining piece 25 deflects and deforms toward the electrical wire accommodating groove 27 side. When the retaining protrusion 33 of the housing 31 is placed at a position lower than the retaining piece 25 of the connector 30, the retaining piece 25 elastically recovers so that the housing 31 is prevented from disengaging upward.

Then, the electrical wires 41 connected to the connector 30 are accommodated in the electrical wire accommodating groove 27 (see FIG. 4). At the time of accommodation, electrical wires 41 are accommodated in the electrical wire accommodating groove 27 on the side opposite to the latch piece 32 of the housing 31 of the connector 30 to which these electrical wires 41 are connected.

### Method of attaching to the single cell group 10

Then, a plurality of cell packs 11 are lined up so that adjacent terminal sections 12 have different polarities, and the battery wiring module 20 in which the busbars 21 and the connectors 30 are arranged is attached to cover the surfaces of the cell packs 11 on which the terminal sections 12 are formed, with the terminal through-holes 22 of the busbars 21 aligned with the terminal sections 12. Accordingly, the connector sections 13 of the cell packs 11 are arranged within the connector holding sections 26.

Then, the bolts 16 for connection of the cells are connected to the sections in the shape of holes of the terminal sections 12 inserted through the busbars 21. After all the bolts 16 are connected thereto, the connectors 30 are pressed downward. As shown in FIG. 6, before the connector 30 is pressed, the terminals 37 in the housing 31 are not in contact with the terminals 15 of the connector section 13, and thus it is in the unconnected state. After the connector 30 is pressed, the connector section 13 is received in the groove section 34 of the housing 31. When the connector 30 is pressed to the position at which the latch piece 32 of the housing 31 abuts against the latching protrusion 14 of the connector section 13, the latch piece 32 of the housing 31 deflects and deforms in the outward direction.

When the connector 30 is further pressed downward, the connecting section 40 of each terminal 37 of the connector 30 receives a terminal 15 of the connector section 13 that is located at a corresponding position. When the connector 30 is pressed to the position at which the latching protrusion 14 of the connector section 13 is fitted into the latch hole 32A of the housing 31, the latch piece 32 of the housing 31 elastically recovers and the housing 31 (connector 30) is latched to the connector section 13 (single cell). On the other hand, the connecting section 40 (elastic contact piece) of the terminal 37 of the connector 30 comes into the state of being in contact with the terminal 15 of the connector section 13, and thus the single cell group 10 is electrically connectable to the voltage detection terminals 37 (in the connected state, see FIG. 2).

When the operation for connecting the connectors 30 and the single cells by pressing the connectors 30 is completed, the electrical wires 41 guided in the electrical wire accommodating grooves 27 are pressed down by the electrical wire fixing sections 28 and are prevented from projecting (see FIG. 1). With this, the battery module M1 is obtained.

### Operations and effects of the present embodiment

In the present embodiment, the resin protector 23 includes the connector holding section 26 that holds the connector 30 so that it is movable from an unconnected position of not being connected to single cells, to a connected position at which it electrically connects the connecting sections 40 of the terminals 37 and the single cells and it is engaged with the single cells.

Therefore, by letting the connector holding section 26 of the resin protector 23 hold the connector 30 including the terminals 37 for detecting the states of single cells, attaching to the single cell group 10, and then moving to the connected position, it is possible to electrically connect the terminals 37 and the single cells, and the connector 30 is engaged with the single cells. On the other hand, the electrical wires 41 are connected in advance to one ends of the terminals 37, and are integrated with the connector 30.

As a result, according to the present embodiment, it is possible to simplify an operation for connecting terminals 37 for detecting the states of single cells.

Furthermore, according to the present embodiment, since the resin protector 23 is provided with the retaining pieces 25 for holding the connectors 30 in a retained state, it is possible to hold the connectors 30 in the retained state even at an unconnected position.

Furthermore, according to the present embodiment, since the resin protector 23 is provided with the electrical wire fixing sections 28 for preventing the electrical wires 41 from projecting, no separate member (for example, a bundling member or the like) for fixing the electrical wires is necessary.

### Other Embodiments

The present invention is not limited to the above-described embodiments with reference to the drawings, and the technical scope of the present invention encompasses, for example, the following embodiments:
(1) The resin protector 23 may be provided with a provisional latch section that prevents downward movement in the unconnected state.
(2) Although, in the above-described embodiment, the resin protector 23 is described in which the electrical wire accommodating grooves 27 are provided with the electrical wire fixing sections 28, the electrical wire accommodating grooves 27 may not necessarily include the electrical wire fixing sections, or electrical wires may also be fixed by another member.
(3) Although, in the above-described embodiment, voltage detection terminals 37 are taken as an example of the terminals 37 for detecting the states of the electrical wires 41, temperature detecting terminals may also be used.

### List of Reference Numerals

M1 ... Battery module
10 ... Single cell group
11 ... Cell pack
12 ... Terminal section
13 ... Connector section
14 ... Latching protrusion section
15 ... Terminal (of the connector section)
20 ... Battery wiring module
23 ... Resin protector
25 ... Retaining piece (retaining section)
26 ... Connector holding section (holding section)
27 ... Electrical wire accommodating groove
28 ... Electrical wire fixing section
30 ... Connector
31 ... Housing
32 ... Latch piece
32A ... Latch hole
33 ... Retaining protrusion
35 ... Terminal accommodating section
37 ... Voltage detection terminal (terminal for detecting the states of single cells)
40 ... Connecting section
41 ... Electrical wire

## Claims

1. A battery wiring module configured to be attached to a single cell group obtained by lining up a plurality of single cells having positive and negative electrode terminals, the battery wiring module comprising:
a connector including a terminal for detecting a state of a single cell; and
a resin protector including a holding section for holding the connector,
wherein an electrical wire is connected to one end of the terminal, and a connecting section that is connectable to the single cell is formed at the other end of the terminal, and
the connector is held in the holding section so as to be movable from an unconnected position at which the connector is not connected to the single cell to a connected position at which the connector electrically connects the connecting section of the terminal to the single cell and is engaged with the single cell.

2. The battery wiring module according to claim 1,
wherein the resin protector has a retaining section for holding the connector in a retained state.

3. The battery wiring module according to claim 1 or 2,
wherein the resin protector has an electrical wire fixing section for preventing the electrical wire from projecting.
